# EUROPEAN PATENT APPLICATION

(11) **EP 1 585 291 A1**
(43) Date of publication of application: **12.10.2005**
(21) Application number: 04008474.1
(22) Date of filing: 07.04.2004
(51) Int. Cl.: H04M 1/60, H04M 1/05, H04M 1/725

(54) **MP3 player capable of wirelessly communicating with a mobile telephone**

(71) Applicant: Yueh, Wen-Hsiang, Taipei County Taiwan 242 (TW)
(72) Inventor: Yueh, Wen-Hsiang, Taipei County Taiwan 242 (TW)
(74) Representative: UEXKÜLL & STOLBERG

(57) **Abstract**

The audio player of the present invention comprises: an audio playing module to decode audio compressed files, produce an audio signal transmitted to an earphone, and receive a voice signal from a microphone; and an attachment mechanism to combine a wireless earphone with the audio playing module, to accomplish an electrical connecting interface therebetween. Therefore, the audio playing module operates the wireless earphone via the electrical connecting interface and establishes two-way audio communication with a mobile phone. Another embodiment of this invention provides an audio player having a wireless transceiver, which can establish a wireless connectivity with a mobile phone and allow two-way audio communication, enabling the audio player to communicate with the mobile phone at any time in response to a ring indication received from the mobile phone.

## Description

### FIELD OF THE INVENTION

The present invention relates to an audio player, more particularly, to an audio player to connect with an external wireless earphone or embeded an internal wireless transceiver, so that it can pause a music playing and answer a call from a mobile phone under a playing operation.

### BACKGROUND OF THE INVENTION

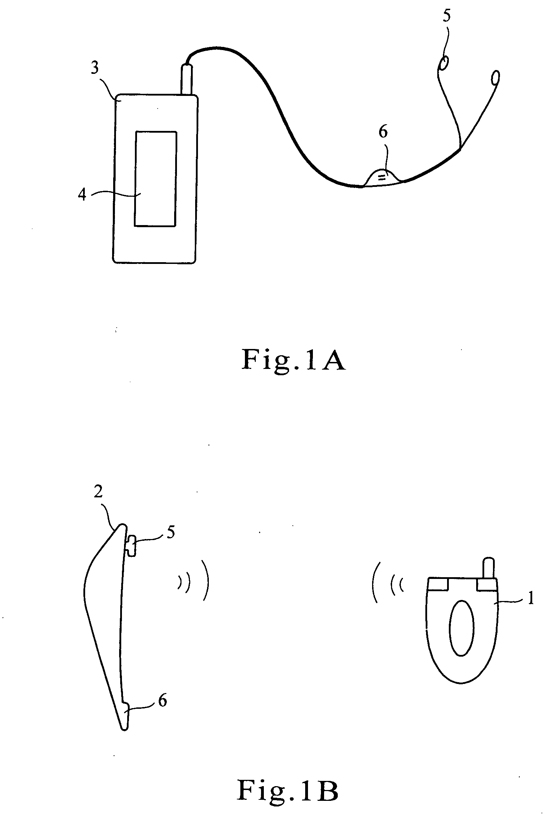

Fig. 1A shows a conventional MP3 player. The conventional MP3 player (3) comprises a display screen (4), an external earphone (5), and an external microphone (6). Devices such as MP3 player (3) and conventional CD players play music by reading data stored on storage media, providing users with the convenience of mobility; with improvements in the functionality of these devices, newer MP3 players (3) use read-write flash memory as the storage media for musical data, and besides the function of music playing, these new products also provide a data interface to receive musical data for renewable memory content, equipping the MP3 player with an information storage function; Furthermore, with the added microphone (6), MP3 player can record voice data, giving users the option of being able to record.

With the growing popularity of telecommunication devices, mobile phones and wireless handsets have become common communication tools for many people. At the same time, a series of related peripheral products have also developed, including devices for indicating incoming calls on mobile phone, such as flashing lights, vibrations, or musical rings, as well as wireless bluetooth earphones. Fig. 1B illustrates the usage of communication between a wireless bluetooth earphone and a bluetooth handset. Two devices are shown in the figure, a wireless handset (1) and a wireless earphone (2), wherein the said wireless earphone (2) comprises an earphone (5) and a microphone (6). During communication, the said wireless handset (1) utilizes the wireless communication capability of the wireless transceiver, so that the wireless earphone (2) can answer the calls made from the wireless handset (1). However, conventional technology has not yet been used for the development of related application between other portable products, specifically wireless handsets and audio players, such as MP3 players. When listening to music or a speech with an audio player, the user might, on the one hand, miss the calls on their wireless handset; while on the other hand, if they do not miss they call, they have to take off the audio player's earphones in order to answer the call, creating an inconvenience for the user. Something else worth noting is that, based on conventional technology, mobile phones and wireless handsets can also be used for recording purposes, however recording time is restricted due to these devices' limited memory capacity.

### SUMMARY OF THE INVENTION

Seeing the as yet unexplored use of conventional technology in connecting wireless handsets and MP3 players, the objective of this invention provides an audio player with a built-in wireless transceiver for pausing music playing and answering incoming calls from mobile phones.

One objective of this invention is to provide an audio player externally connected a wireless earphone that can pause music playing and answer incoming call from mobile phones.

Another objective of this invention is to provide an audio player equipped with a earphone and a microphone that can be used as a wireless headset for communicating with a mobile phone or wireless handset.

Yet another objective of this invention is to provide an audio player that can be used for recording purposes to store conversations with mobile phone or wireless handset.

Still another objective of this invention is to provide an audio player with an external wireless earphone that can establish wireless connectivity with a mobile phone or wireless handset.

Finally, another objective of this invention is to provide an audio player with a recording function that can be connected to an external wireless earphone and establish two-way audio communication with a mobile phone or wireless handset, as well as being able to record and store the conversation.

In one embodiment, the present invention provides an audio player, including a memory unit to store audio compressed files; a DSP processor to decompress audio compressed files under a playing operation, to produce an audio signal; an audio outputting unit responsive to the audio signal, to convert this audio signal into sound; an audio collecting unit responsive to a voice, to provide a electrical signal transmitted to the DSP processor; and a key inputting unit to transmit a command requested by a user to the DSP processor; characterized in that:
the audio player further comprises a wireless transceiver connected to the antenna and the DSP processor, and the DSP processor operates the wireless transceiver to allow two-way audio communication to a mobile phone; when the audio compressed file is played under the playing operation of the DSP processor, the DSP processor automatically pauses the playing operation and establishes a conversation with the mobile phone through the audio outputting unit and audio collecting unit under a suspending operation if a ring indication from the mobile phone is transmitted to said DSP processor via the wireless transceiver.

Wherein, the wireless transceiver would either be a bluetooth transceiver or would be based in RF connectivity technologies, such as DECT or 802.11b.

In another embodiment, the present invention provides a method for an audio player having an earphone and a microphone to allow two-way audio communication to a mobile phone, comprising the following steps:
establishing a wireless connectivity with a wireless transceiver installed in the audio player between the audio player and the mobile phone ;
pausing a playing operation of the audio player if a ring indication from the mobile phone via said wireless connection is transmitted to the audio player; and
transmitting a sound signal from the mobile phone to the earphone and a voice signal from the microphone to the mobile phone through the wireless transceiver.

In one of other embodiments, this invention provides an audio player comprising an audio playing module having an earphone and a microphone, to decode audio compressed files, produce an audio signal transmitted to an earphone, and receive a voice signal from a microphone; and an attachment mechanism to combine a wireless earphone with the audio playing module for accomplishing an electrical connecting interface therebetween. The audio playing module operates the wireless earphone via said electrical connecting interface to establish two-way audio communication to a mobile phone, and to enable a conversation with the mobile phone at any time in response to a ring indication received from the mobile phone Wherein, said electrical connecting interface at least comprises: control signals between the wireless earphone and the audio playing module; audio signal transmitted from the mobile phone; and voice signal transmitted to the mobile phone.

Wherein, said electrical connecting interface furthercomprises: a ground signal connecting the wireless earphone and the audio playing module.

Wherein, said control signals at least comprises: a ring indication signal transmitted from the mobile phone; and a response signal transmitted from audio playing module operating the wireless earphone.

Wherein, said wireless earphone and the mobile phone are a bluetooth earphone and a bluetooth mobile phone, respectively.

Wherein, said audio playing module produces a ringing signal in said earphone in response to the ring indicating signal.

In one of other embodiments, the present invention provides an audio player, comprising:
an audio playing module, including: a memory unit for storing audio compressed data; a DSP processor for decoding the audio compressed data to produce an audio signal under a playing operation; a earphone to convert the audio signal into sound; a microphone to produce a voice signal transmitted to the DSP processor; and a key inputting unit to transmit a command requested by a user to the DSP processor; and
an attachment mechanism, to combine a wireless earphone with the audio playing module for accomplishing an electrical connecting interface therebetween; such electrical connecting interface comprise: control signals between the wireless earphone and the DSP processor; audio signal transmitted from the mobile phone; and voice signal transmitted to the mobile phone;

Wherein, said control signals at least comprise: a ring indication signal transmitted from the mobile phone; and a response signal transmitted from the audio playing module operating the wireless earphone.

Based on the above embodiment, this invention provides a method for establishing two-way audio communication between an audio player with a wireless earphone and a mobile phone. This method comprises the following steps:
connecting a electrical connecting interface between the wireless earphone and the audio player;
controlling the wireless earphone to establish a wireless connectivity between the audio player and the mobile phone;
transmitting a ring indication signal from the wireless earphone to the audio player via said electrical connecting interface;
transmitting a response signal from the audio player to the wireless earphone via said electrical connecting interface; and
enabling a conversation in two-way audio communication between the audio player and the mobile phone.

MP3 players developed according to the embodiments of this invention can pause music playing to answer calls from mobile phones. When MP3 file is being played under a playing operation, the MP3 player will, in response to a ring indication from a mobile phone, produce a ringing signal in the earphone. Thus, the user can determine whether the playing operation is paused and a conversation with the mobile phone is established.

### BRIEF DESCRIPTION OF ILLUSTRATIONS

Fig. 1A shows a conventional MP3 player.
Fig. 1B is a schematic diagram illustrating the usage of communication between a wireless bluetooth earphone and a bluetooth handset.
Fig. 2 is a schematic drawing of the first embodiment of the present invention.
Fig. 3 is a block diagram of the MP3 player according to the first embodiment of this invention.
Fig. 4 is another block diagram of the MP3 player according to the first embodiment of this invention.
Fig. 5 is a flowchart of the first embodiment of the present invention.
Fig. 6 is a block diagram of the second embodiment of the present invention, illustrating an electrical connecting interface between the MP3 player and the wireless earphone.
Fig. 7 is a detailed block diagram of Fig. 6.
Fig. 8 is a flowchart of the second embodiment of the present invention.

### DETAILED DESCRIPTION OF THE INVENTION

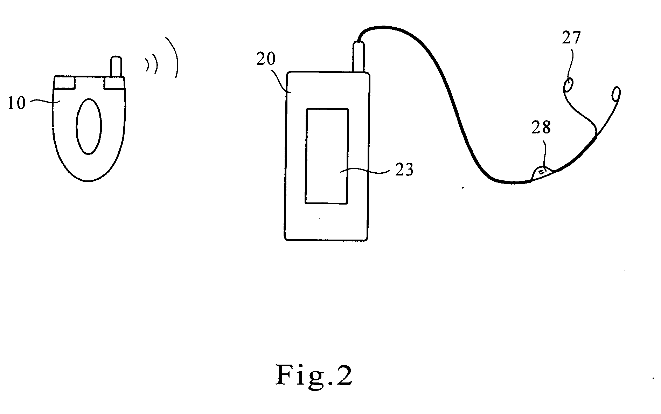

Figure 2 is a schematic diagram illustrating the operation of the first embodiment of this invention, the MP3 player. In accordance with the first embodiments of this invention, the MP3 player (20) practices a playing operation, making the MP3 player (20) play MP3 files or other audio compressed files, and send music playing to the earphone (27). Furthermore, a wireless connectivity can be established between the MP3 player (20) and a mobile phone (10) through a wireless transceiver built in the MP3 player (20), allowing for two-way audio communication. When MP3 file is played under the playing operation of the MP3 player (20), the MP3 player (20) can produce a ringing signal in the earphone (27) at any time in response to a ring indication transmitted from the mobile phone (10), so that the user may determine whether the playing operation is paused and a conversation with the mobile phone (10) is established.

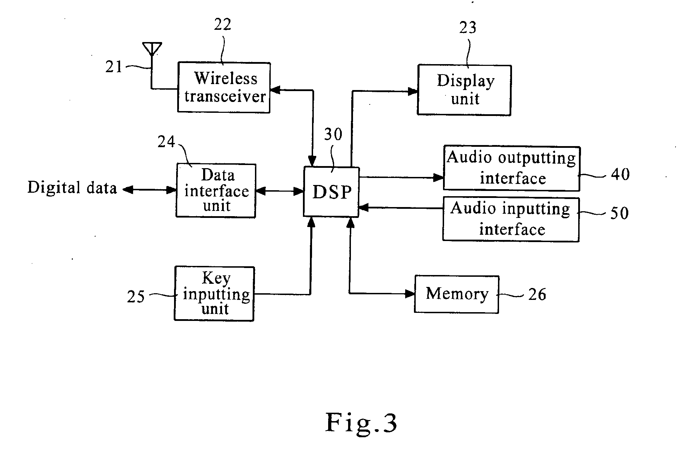

Next, figure 3 is a block diagram of the MP3 player according to the first embodiment of the present invention. This MP3 player (20) comprises: a memory unit (26), which is a non-volatile memory device used to store MP3 files or other audio compressed files; a DSP processor (30), which can be programmable to process digital signals, and DSP processor (30) executes a program stored in the memory unit (26), to decode MP3 or audio compressed files and produce a corresponding audio signal during a playing operation; an audio outputting interface (40), being a connection port for the earphone (27), to transmit the audio signal outputted from the DSP processor (30) to the earphone (27); an audio collecting interface (50), being a connection port for the microphone (28), to receive a voice signal from the microphone (28) and transmit this signal to the DSP processor (30); a data interface unit (24), being a USB port, to receive external digital data such as MP3 files or audio compressed files, which are later processed by the DSP processor (30) and stored in the memory unit (26); a display unit (23), connected to the DSP processor (30), to display the status of the playing operation; and a key inputting unit (25) that comprises a number of keys for producing electronic signals corresponding the users' commands, which are transmitted to the DSP processor (30).

The MP3 player (20) of the present invention further comprises a wireless transceiver (22) connected to the antenna (21) and the DSP processor (30), and the DSP processor (30) controls or operates the wireless transceiver (22), allowing for two-way audio communication with a mobile phone (10). In this embodiment, the exemplary wireless transceiver (22) is a bluetooth transceiver, and the said DSP processor (30) operates bluetooth handset profiles to achieve two-way audio communication with the bluetooth handset. When MP3 files or audio compressed files are played under the playing operation, once DSP processor (30) receives a ring indication from a mobile phone (10) via the wireless transceiver (22), the DSP processor (30) would automatically practice a suspending operation, pausing the music playing and enabling a conversation with the mobile phone (10) by using the earphone (27) and microphone (28).

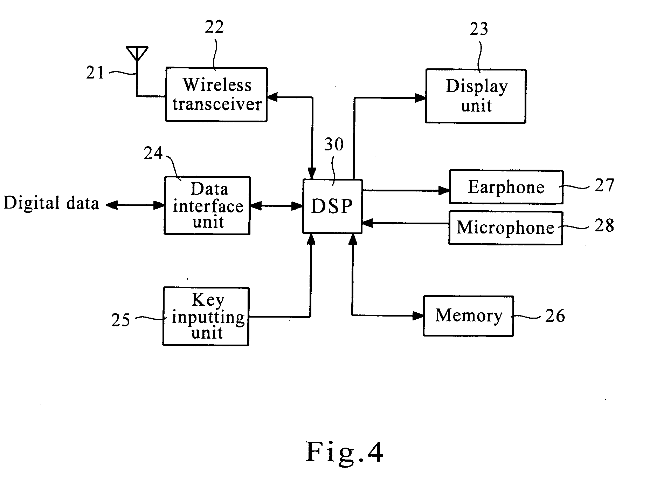

Figure 4 is another block diagram of the MP3 player according to the first embodiment of this invention. The MP3 player (20) comprises: a memory unit (26), a DSP processor (30), a data interface unit (24), a display unit (23), and a key inputting unit (25). With regard to the same connections and functionality shown in Fig. 2, the MP3 player (20) further comprises: an earphone (27) to convert audio signal outputted from the DSP processor (30) into sound; and a microphone (28) to collect voices, producing a corresponding electronic signal and transmitting the signal to the DSP processor (30).

Furthermore, the MP3 player (20) in this invention further comprises a wireless transceiver (22) connected to the antenna (21) and the DSP processor (30), and the DSP processor (30) controls or operates the wireless transceiver (22), allowing for two-way audio communication with a mobile phone (10). In this embodiment, the exemplary wireless transceiver (22) is a bluetooth transceiver, and the said DSP processor (30) operates bluetooth handset profiles to achieve two-way audio communication with the bluetooth handset. When MP3 files or audio compressed files are played under the playing operation, once DSP processor (30) receives a ring indication from a mobile phone (10) via the wireless transceiver (22), the DSP processor (30) would automatically practice a suspending operation, pausing the music playing and enabling a conversation with the mobile phone (10) by using the earphone (27) and microphone (28).

Based the embodiments shown in Fig. 3 and Fig. 4, the DSP processor (30) executes a program stored in the memory unit (26) to practice the suspending operation. During suspension, the DSP processor (30) will first produce an audio ringing signal in the earphone (27); and then, according to the command transmitted by the key inputting unit (25), the DSP processor (30) will either stop the ring indication of the mobile phone (10), or pause the music playing and enable t a conversation with the mobile phone (10) through the earphone (27) and microphone (28).

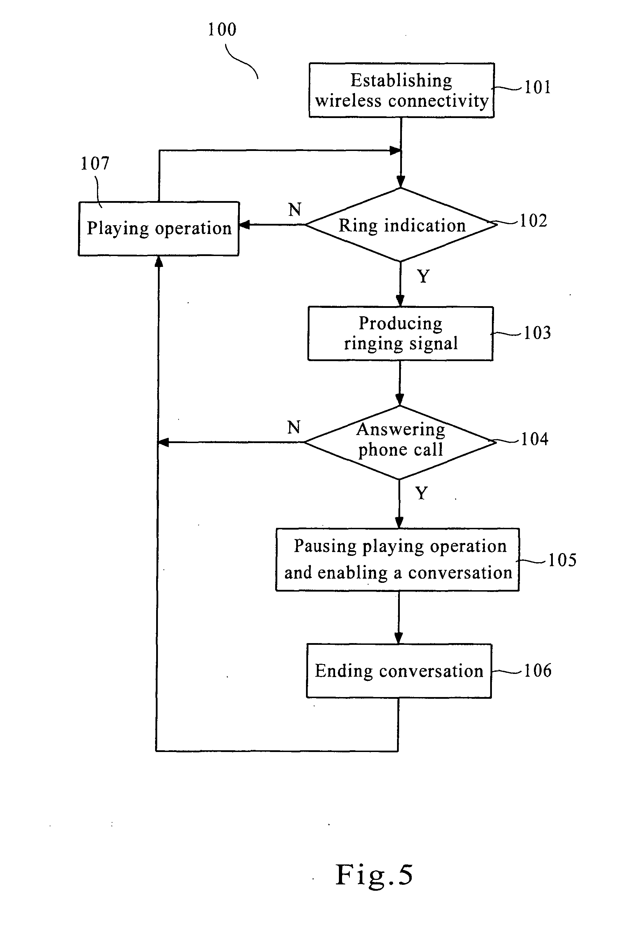

Figure 5 is a flowchart of the first embodiment of the present invention. This invention provides a method applied especially to an audio MP3 player (20), allowing the audio MP3 player to establish two-way audio communication with mobile phones (10); the block diagrams of this MP3 player (20) are shown in Fig. 3 and Fig. 4. The method (100) of the present comprises the following steps:
Step 101: Establishing wireless connectivity
   The DSP processor (30) operates the wireless transceiver (22) to establish a wireless connectivity with a mobile phone (10) through an antenna (21). The wireless connectivity is based on either bluetooth communication or RF connectivity technologies, such as DECT or 802.11b. In these embodiments, the wireless transceiver (22) is a bluetooth transceiver, and the DSP processor (30) operates bluetooth handset profiles to realize two-way audio communication with a bluetooth handset.
Step 102: Ring indication
   The DSP processor (30) determines whether a ring indication from the mobile phone (10) is received; if there is no ring indication, the DSP processor (30) continues the playing operation at Step 107 and remains in that status. If there is a ring indication, the DSP processor (30) would enter the suspending operation, which comprises the following steps:
Step 103: Producing ringing signal
   In order to signify the ring indication of the mobile phone (10) to the user, the DSP processor (30) produces a ringing signal and transmits this signal to the earphone (27). In one embodiment of the present invention, if a MP3 file is played under the playing operation of the DSP processor (30), the ringing signal will be mixed to the audio signal corresponding to the played MP3 file and transmitted to the earphone (27).
Step 104: Answering a phone call
   Based on the user's command received through the key inputting unit (25), the DSP processor determines whether or not to answer the incoming call. If the DSP processor (30) concludes that the user has commanded not to answer the call from the mobile phone (10), then DSP processor (30) will stop transmitting the audio ringing signal to the earphone (27), inform the mobile phone (10) that the call is terminated, and continue the playing operation. On the other hand, if the DSP processor (30) concludes that the user has commanded to answer the call from the mobile phone (10), then a conversation with the mobile phone (10) would begin.
Step 105: Enabling a conversation and pausing playing operation
   The DSP processor (30) stops transmitting the ringing signal and pauses music playing, establishing talking status in order to communicate with the mobile phone (10) by using the earphone (27) and microphone (28). In one of embodiments of the present invention, the DSP processor (30) can store the content of the conversation in the memory unit (26) according to the command requested by the user through the key inputting unit (25). Furthermore, the file containing the content of the conversation can also be outputted from the data interface unit (24).
Step 106: Ending a conversation
   Based on the command requested by the user through the key inputting unit (25), the DSP processor (30) can terminate communication with the mobile phone (10), and continue to execute Step 107, the playing operation.

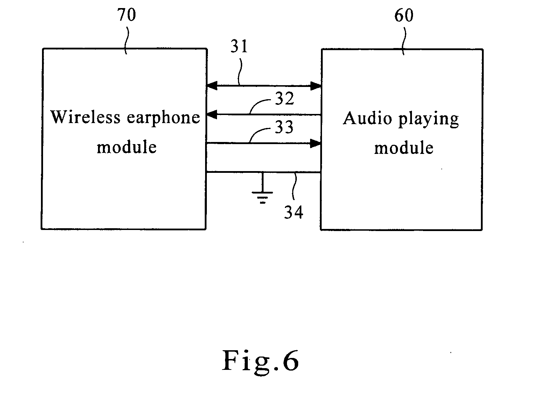

Figure 6 is a block diagram of the second embodiment of the present invention, illustrating an electrical connecting interface between the MP3 player and the wireless earphone. In this embodiment of the present invention, the MP3 player can be combine with a wireless earphone. In more detail, MP3 player includes an audio playing module (60) to decode audio compressed files or MP3 files, produce an audio signal transmitted to an earphone, and receive a voice signal from a microphone. The wireless earphone comprises a wireless earphone module (70) that can establish a wireless connectivity with a mobile phone or wireless handset, allowing for two-way audio communication.

In this the embodiment of the invention, MP3 player further comprises an attachment mechanism to combine a wireless earphone with the body of the MP3 player, as well as to accomplish a electrical connecting interface between the audio playing module (60) and wireless earphone module (70). One of the embodiments of the invention is that the attachment mechanism between the MP3 player and the wireless earphone is in fact in a holding mechanism design. Its contact surface comprises a number of electrical contacts, allowing the audio playing module (60) and wireless earphone module (70) to realize electrical connection.

This electrical connecting interface comprises at least: control signals (31), that is the control signals between the wireless earphone and the audio playing module (60), the control signals (31) at least comprises: the ring indication signal of the mobile phone or wireless handset transmitted from the wireless earphone module (70) to the audio playing module (60), and a response signal outputted from the audio module (60) to the wireless earphone module (70) for operating the wireless earphone; a sound signal (33) transmitted by the mobile phone and outputted to the audio playing module (60) via the wireless earphone module (70) after two-way audio communication has been established between the wireless earphone module (70) and the mobile phone; and a voice signal (32) collected through the microphone and transmitted to the mobile phone through the wireless earphone module (70). The response signal is outputted by the audio playing module (60) for regarding whether or not to answer the call from the mobile phone.

The electrical connecting interface further comprises a ground signal (34), for forming an electrical loop between the audio playing module (60) and the wireless earphone module (70).

In another embodiment of this invention, the signals of the electrical connecting interface represent become a data bus between the wireless earphone module (70) and the audio playing module (60); the control signal (31), voice signal (32), sound signal (33), ring indication signal, response signal, etc. are all coded data signals, rather than just being signals of electrical contacts.

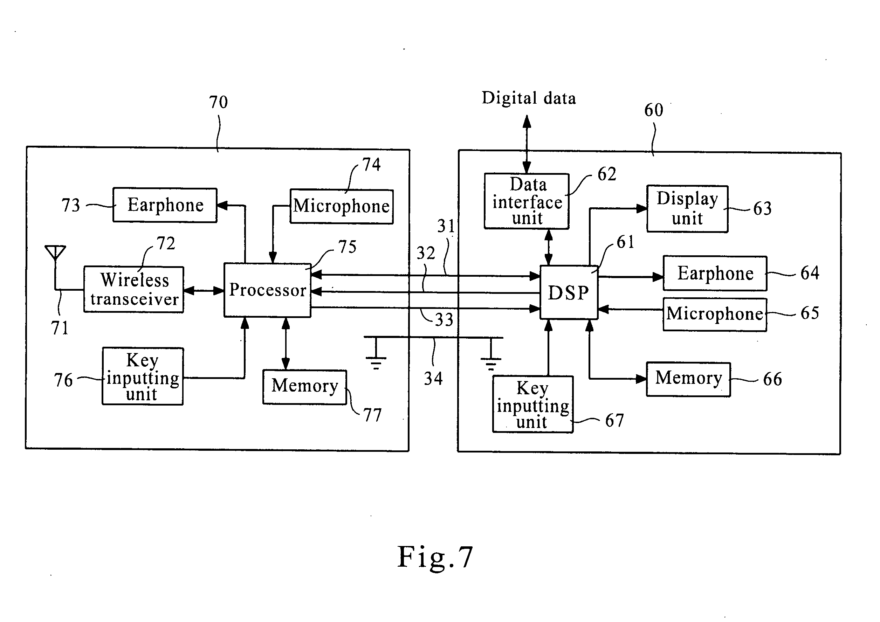

Figure 7 is a detailed block diagram of Figure 6. The wireless earphone module (70) includes: a memory (77), that is a non-volatile memory for storing a program; an earphone (73) to convert analog audio signals into sound; a microphone (74) to convert sound into an electronic signal; a key inputting unit (76) that features a number of keys for producing electrical signals corresponding to users' commands, and transmits these signals to the processor (75); a wireless transceiver (72) connected to an antenna (71), for tuning and demodulating RF; and a processor (75) to execute the program stored in the memory (77) and operate the wireless transceiver (72), allowing for two-way audio communication with a mobile phone. Thus, users may enable a conversation with a mobile phone using the earphone (73) and the microphone (74).

In One embodiment of the present invention, when wireless connectivity has been established between the wireless earphone module (70) and a mobile phone, the processor (75) will produce an indication signal (31) responsive to the ring indication of the mobile phone, and transmit this signal to the audio playing module (60) via the electrical connecting interface. Meanwhile, the processor (75) will receive a response signal from the audio playing module (60), and determine whether or not to establish two-way audio communication with the mobile phone. When two-way audio communication has been established, the processor (75) will receive the sound signal from the mobile phone via wireless transceiver (72), and output the sound signal (33) to the audio playing module (60); at the same time, it will also receive a voice signal (32) from the audio playing module (60), and transmit the voice signal to the mobile phone via the wireless transceiver (72).

Figure 7 also shows the audio playing module (60) that comprises: a memory unit (66), which is a non-volatile memory device, to store MP3s or other audio compressed files; a DSP processor (61) to execute a programs stored in the memory (66), decoding MP3 or audio compressed files and producing corresponding audio signals during a playing operation; an earphone (64) to convert audio signals outputted from the DSP processor (61) into sound; a microphone (65) to produce a voice signal and transmit the signal to the DSP processor (61); a data interface unit (62), that is a USB port, to receive and transmit external digital data such MP3 files or audio compressed files, which is later processed by the DSP processor (61) and stored in the memory (66); a display unit (63) connected to the DSP processor (61), displaying the status of the play operation; and a key inputting unit (67) including a number of keys for producing electronic signals corresponding to user commands, that transmits these signals to the DSP processor (61).

In this invention, the DSP processor (61) receives an indication signal (31) through the electrical connecting interface and produces a ringing signal in the earphone (64) in response to the indication signal. If the DSP processor (61) is playing MP3 files at the moment, then the ringing signal will be mixed to the audio signal corresponding to the played MP3 file and outputted to the earphone (64). Based on the user's command received through the key inputting unit (67), the DSP processor (61) determines whether to answer the call from the mobile phone or not, and transmits a response signal to the processor (75). When two-way audio communication has been established between the wireless earphone module (70) and the mobile phone, the DSP processor (61) will receive sound signal from the mobile phone via the wireless earphone module (70), and output sound signal to the earphone (64); at the same time, the DSP processor (61) will also receive voice signal from the microphone (65), and transmit voice signal to the mobile phone via the wireless earphone module (70). Thus, users can enable a conversation with a mobile phone by using the earphone (64) and microphone (65).

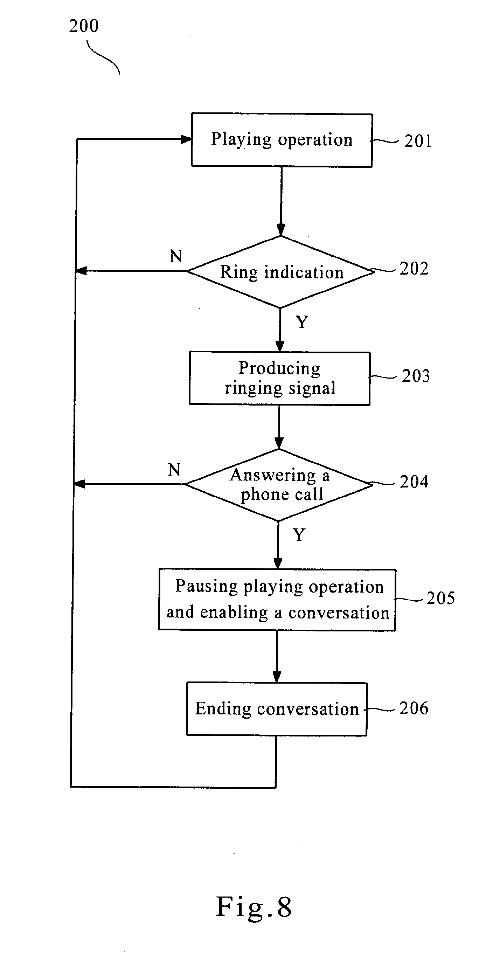

Figure 8 is a flowchart of the second embodiment of the present invention. The invention provides a method (200) applied especially to an audio MP3 player, allowing the audio MP3 player to establish two-way audio communication with mobile phones; the block diagrams of audio MP3 player are shown in Fig. 6 and Fig. 7. The method of the present invention comprises the following steps:
Step 201: Playing operation
   The DSP processor (61) executes a program stored in the memory (66), decoding MP3 or audio compressed files, producing corresponding audio signal, and transmitting the audio signal to the earphone (64).
Step 202: Ring indication
   The DSP processor (61) recognizes a ring indication from a mobile phone; when there is no call, the DSP processor (61) will continue to execute the playing operation at Step 201. If there is a call, the DSP processor (61) will execute a suspending operation, which comprises the following steps:
Step 203: Producing the ringing signal
   In order to signify the ring indication of the mobile phone to the user, the DSP processor (61) produces a ringing signal and transmits this signal to the earphone (64). In one embodiment of the present invention, if an MP3 file is played under the playing operation of the DSP processor (61), the ringing signal will be mixed to the audio signal corresponding to the played MP3 file and transmitted to the earphone (64).
Step 204: Answering a phone call
   Based on the user's command received through the key inputting unit, the DSP processor (61) determines whether to answer the incoming call or not. If the user has commanded not to answer the call from the mobile phone, the DSP processor (61) would then stop transmitting the audio ringing signal to the earphone (64), inform the mobile phone that the call has been terminated, and continue the playing operation. On the other hand, if the user has commanded to answer the call from the mobile phone, then the DSP processor (61) will inform the processor (75) to establish two-way audio communication with the mobile phone.
Step 205: Enabling a conversation and pausing playing operation
   The DSP processor (61) stops transmitting the ringing signal and pauses the play operation, establishing a talking status to communicate with the mobile phone by using the earphone (64) and microphone (65). In one of embodiments of the present invention, the DSP processor (61) can store the content of the conversation in the memory (66) according to the command requested by the user through the key inputting unit (67). Furthermore, the file containing the content of the conversation can also be outputted from the data interface unit (62).
Step 206: Ending a conversation
   Based on the commands requested by the user through the key inputting unit (67), the DSP processor (61) can stop communication with the mobile phone, and then continue to the playing operation.

## Claims

1. A MP3 player, comprising:
a memory unit, to store MP3 files;
a DSP processor, to decode the MP3 files under a playing operation, producing an audio signal;
an earphone, responsive to said audio signal to convert said audio signal into sound;
a microphone, responsive to a voice to provide an electrical signal transmitted to said DSP processor; and
a key inputting unit, to transmit a command requested by a user to said DSP processor; **characterized in that**:
said MP3 player further comprises a wireless transceiver connected to an antenna and said DSP processor, said DSP processor operates said wireless transceiver to allow two-way audio communication to a mobile phone, when MP3 file is played under the playing operation of said DSP processor, said DSP processor automatically pauses the playing operation and establishes a conversation with the mobile phone through the earphone and microphone under a suspending operation if a ring indication from the mobile phone is transmitted to said DSP processor via the wireless transceiver.

2. A MP3 player, comprising:
a memory unit, to store MP3 files;
a DSP processor, to decode the MP3 files under a playing operation, producing an audio signal;
an audio outputting interface, to transmit said audio signal to an earphone;
an audio collecting interface, to receive a voice signal from a microphone, and transmit the same to said DSP processor; and
a key inputting unit, to transmit a command requested by a user to the DSP processor; **characterized in that**:
said MP3 player further comprises a wireless transceiver connected to an antenna and said DSP processor, said DSP processor operates said wireless transceiver to allow two-way audio communication to a mobile phone, when MP3 file is played under the playing operation of said DSP processor, said DSP processor automatically pauses the playing operation and transmits a sound signal from the mobile phone to the earphone via said audio outputting interface and the voice signal to the mobile phone if a ring indication from the mobile phone is transmitted to said DSP processor via the wireless transceiver.

3. The MP3 player of claim 1 or 2, further comprises a display unit to connect with said DSP processor, the display unit shows the message of said ring indication.

4. The MP3 player of claim 3, wherein the said display unit shows the message of said playing operation.

5. The MP3 player of claim 1 or 2, wherein the said memory unit is a non-volatile memory device.

6. The MP3 player of claim 5, wherein said DSP processor executes a program stored in the non-volatile memory device to practice the playing operation.

7. The MP3 player of claim 1 or 2, further comprises a data interface unit to connect with the DSP processor, allowing the DSP processor to receive MP3 files through said data interface.

8. The MP3 player of claim 7, wherein said data interface unit is a USB port.

9. The MP3 player of claim 1, wherein the said DSP processor executes a program stored in the memory unit to practice the suspending operation.

10. The MP3 player of claim 9, wherein said DSP processor, after receiving the ring indication from the mobile phone via the wireless transceiver, practices the suspending operation according to the command transmitted by the key inputting unit,.

11. The MP3 player of claim 1, wherein said DSP processor determines whether the content of the conversation is recorded in the memory unit according to the command transmitted from the key inputting unit.

12. The MP3 player of claim 2, wherein said DSP processor, according to the command transmitted by the key inputting unit, determines whether the audio signal from the mobile phone and the voice signal transmitted to the mobile phone are recorded in the memory unit.

13. The MP3 player of claim 1 or 2, wherein said DSP processor generates a ringing signal transmitted to the earphone after receiving a ring indication from the mobile phone via the wireless transceiver.

14. The MP3 player of claim 1 or 2, wherein said DSP processor determines whether the playing operation is paused according to the command transmitted by the key inputting unit.

15. The MP3 player of claim 1 or 2, wherein said DSP processor determines whether a conversation with the mobile phone is established according to the command transmitted from the key inputting unit.

16. The MP3 player of claim 1 or 2, wherein said wireless transceiver is a bluetooth transceiver, and said mobile phone is a bluetooth handset.

17. An audio player, comprising:
a memory unit, to store audio compressed files;
a DSP processor, to decompress audio compressed files under a playing operation, producing an audio signal;
an audio outputting unit, responsive to said audio signal to convert said audio signal into sound;
an audio collecting unit, responsive to a voice to provide an electrical signal transmitted to said DSP processor; and
a key inputting unit, to transmit a command requested by a user to said DSP processor; **characterized in that**:
said audio player further comprises a wireless transceiver connected to the antenna and said DSP processor, said DSP processor operates said wireless transceiver to allow two-way audio communication to a mobile phone; when said audio compressed file is played under the playing operation of said DSP processor, said DSP processor automatically pauses the playing operation and establishes a conversation with the mobile phone through the audio outputting unit and audio collecting unit under a suspending operation if a ring indication from the mobile phone is transmitted to said DSP processor via the wireless transceiver.

18. The audio player of claim 17 is a MP3 player.

19. The audio player of claim 17, further comprises a display unit to connect with said DSP processor, the display unit shows the message of said ring indication.

20. The audio player of claim 19, wherein the said display unit shows the message of said playing operation.

21. The audio player of claim 17, wherein the said memory unit is a non-volatile memory device.

22. The audio player of claim 21, wherein said DSP processor executes a program stored in the non-volatile memory device to practice the playing operation.

23. The audio player of claim 17, further comprises a data interface unit to connect with the DSP processor, allowing the DSP processor to receive audio compressed files through the data interface.

24. The audio player of claim 23, wherein said audio compressed files are MP3 files.

25. The audio player of claim 23, wherein said data interface unit is a USB port.

26. The audio player of claim 17, wherein said DSP processor practices the suspending operation according to execution of a program stored in the memory unit.

27. The audio player of claim 17, wherein said DSP processor, according to the command transmitted by the key inputting unit, determines whether a conversation with the mobile phone is established after receiving the ring indication from the mobile phone via the wireless transceiver.

28. The audio player of claim 17, wherein said DSP processor determines whether the content of the conversation is recorded in the memory unit according to the command transmitted by the key inputting unit.

29. The audio player of claim 17, wherein said DSP processor generates a ringing signal transmitted to the audio outputting unit after receiving the ring indication from the mobile phone via the wireless transceiver.

30. The audio player of claim 29, wherein said DSP processor determines whether the playing operation is paused according to the command transmitted by the key inputting unit.

31. The MP3 player of claim 29, wherein said DSP processor determines whether a conversation with a mobile phone is established according to the command transmitted by the key inputting unit.

32. The MP3 player of claim 17, wherein said wireless transceiver is a bluetooth transceiver, and said mobile phone is a bluetooth handset.

33. A method for an audio player having an earphone and a microphone to allow two-way audio communication to a mobile phone, the method comprising:
establishing a wireless connectivity with a wireless transceiver installed in the audio player between the audio player and the mobile phone ;
pausing a playing operation of the audio player if a ring indication from the mobile phone via said wireless connection is transmitted to the audio player; and
transmitting a sound signal from the mobile phone to the earphone and a voice signal from the microphone to the mobile phone through the wireless transceiver.

34. The method of claim 33, wherein said wireless transceiver is a bluetooth transceiver, and said mobile phone is a bluetooth handset.

35. The method of claim 33, further comprises: the audio player generates a ringing signal and transmits the ringing signal to the earphone after receiving the ring indication.

36. The method of claim 33, further comprises: determining whether the playing operation is paused according to a command requested by a user.

37. The method of claim 33, further comprises: the audio player plays MP3 file undersaid playing operation.

38. The method of claim 33 further comprises: determining whether the audio signal from the mobile phone and the voice signal from the microphone are recorded according to a command requested by a user.

39. The method of claim 38 further comprises: outputting the record via a data interface unit of the audio player.

40. The method of claim 33, further comprises: displaying the ring indication in a display unit of the audio player.

41. An audio player, comprising:
an audio playing module, to decode audio compressed files, produce an audio signal transmitted to an earphone, and receive a voice signal from a microphone; and
an attachment mechanism, to combine a wireless earphone with the audio playing module for accomplishing an electrical connecting interface therebetween;
wherein said audio playing module operates said wireless earphone via said electrical connecting interface to establish two-way audio communication to a mobile phone, and to enable a conversation with the mobile phone at any time in response to a ring indication received from the mobile phone.

42. The audio player of claim 41, wherein said electrical connecting interface at least comprises: control signals between the wireless earphone and the audio playing module; a audio signal transmitted from the mobile phone; and a voice signal transmitted to the mobile phone.

43. A method for an audio player having an earphone and a microphone to allow two-way audio communication to a mobile phone, the method comprising:
accomplishing an electrical connecting interface between said audio player and a wireless earphone;
operating said wireless earphone via said electrical connecting interface to establish two-way audio communication to the mobile phone; and
enabling a conversation with the mobile phone at any time in response to a ring indication received from the mobile phone.

44. The method of claim 43, further comprising:
providing control signals between the wireless earphone and the audio playing module in said electrical connecting interface;
a audio signal transmitted from the mobile phone in said electrical connecting interface; and
a voice signal transmitted to the mobile phone in said electrical connecting interface.

45. A method for establishing two-way audio communication between an audio player with a wireless earphone and a mobile phone, said method comprising the following steps:
connecting a electrical connecting interface between the wireless earphone and the audio player;
controlling the wireless earphone to establish a wireless connectivity between the audio player and the mobile phone;
transmitting a ring indication signal from the wireless earphone to the audio player via said electrical connecting interface;
transmitting a response signal from the audio player to the wireless earphone via said electrical connecting interface; and
enabling a conversation in two-way audio communication between the audio player and the mobile phone.
